# EUROPEAN PATENT APPLICATION

(11) **EP 2 740 775 A1**
(43) Date of publication of application: **11.06.2014**
(21) Application number: 12819625.0
(22) Date of filing: 30.07.2012
(51) Int. Cl.: C09D 167/02, B65D 8/00, C09D 167/03, B65D 25/14

(54) **COATING MATERIAL FOR COATING METAL CANS, AND METAL CAN COATED WITH SAME**

(30) Priority: 01.08.2011 JP 2011168666
(71) Applicant: Sakuranomiya Chemical Co., Ltd., Osaka-shi Osaka 534-0027 (JP); Daiwa Can Company, Chiyoda-ku, Tokyo 100-7009 (JP); Bell Polyester Products Inc., Yamaguchi 747-0823 (JP)
(72) Inventor: YAMAZAKI Masao, Moriyama-shi Shiga 524-0044 (JP); TABUKA Sadateru, Osaka-shi Osaka 534-0027 (JP); HASEGAWA Tsuyoshi, Osaka-shi Osaka 534-0027 (JP); KONAGAYA Hirokazu, Sagamihara-shi Kanagawa 252-5183 (JP); MARUO Katsuya, Sagamihara-shi Kanagawa 252-5183 (JP); OHNISHI Katsumi, Houfu-shi Yamaguchi 747-0823 (JP); TOMURA Hideaki, Houfu-shi Yamaguchi 747-0823 (JP)
(74) Representative: Duckworth, Timothy John
(86) International application number: PCT/JP2012/069371
(87) International publication number: WO 2013/018775

(57) **Abstract**

The present invention provides a highly retort-resistant metal can coating material that can form a pinhole-free coating that excels in strength, solvent resistance, impact resistance, processability, etc., and a metal can coated with the coating material. The metal can coating material contains particles of a thermoplastic resin, and the thermoplastic resin contains at least 10 mass% of a polybutylene naphthalate resin (PBN). Preferably, the particles have an average primary particle diameter in the range from 10 nm to 1000 nm.

## Description

### Technical Field

The present invention relates to a coating material for metal cans (hereinafter also referred to as "metal can coating material") and a metal can coated with the coating material.

### Background Art

Heretofore, can bodies and can lids used in metal containers such as food cans for storing food etc. and beverage cans generally have a coating and/or a printing on their surfaces, for the purpose of corrosion resistance and decorativeness. As a coating material used for the above-described coating etc., there has been proposed a resin composition for use as an aqueous coating material, containing an acrylic emulsion, an acrylic modified epoxy resin, and an amino resin (see Patent Document 1, for example). However, because the acrylic emulsion contains monomers contributing to crosslinking, volumetric shrinkage may occur when the resin composition is heat-treated. In addition, water, which has a high surface tension, is used as a solvent. As a result, a coating formed from the resin composition has pinholes, so that it is not quite satisfactory in terms of corrosion resistance, decorativeness, etc. Furthermore, as a resin composition for use as an aqueous coating material, an acrylic modified epoxy aqueous emulsion has been used widely. However, along with the rise of environmental awareness in recent years, there is a growing demand for epoxy resin-free techniques.

The problem of pinholes can be solved by providing a thermoplastic resin film on an outer surface of a can lid. However, when the can lid is processed with a seaming roll, the can lid surface (an outer film surface) is subjected to a pulling-away (stripping) action upon contact with a machining tool surface. Thus, abrasions are formed on a surface of the film on the seamed portion, which not only may cause a problem regarding rust resistance but also may ruin the appearance. On this account, there has been disclosed a method in which, in order to prevent surface abrasions etc. in the can lid production process, a thermoplastic resin film layer with an amorphous ratio of at least 60% is provided, and on an inner surface of the can lid, another thermoplastic film layer is provided that has a biaxially-oriented two-layer structure with the metal surface side being made of a resin with a low melting point and the side away from the metal surface being made of a resin with a high melting point (see Patent Document 2, for example). In this case, however, these film layers are thick (about 10 µm), so that not only the physical properties of the film layers are not satisfactory but also this method has a problem from an economical viewpoint. Furthermore, in the case where a laminate material to which an oriented polyester resin film is attached is used, there is a problem in that hair-like (whisker-like) resin pieces called "enamel hairs (angel hairs)" may be formed at the time of molding a can lid or opening of a can. This is because the polyester resin film has a high strength and is thick. As a method for preventing the generation of enamel hairs, an attempt has been made to decrease the stretch ratio at the time of producing the resin film, for example. However, this is technically difficult.

On this account, there has been proposed a coating material for metals, which can form a pinhole-free coating excellent in strength, solvent resistance, impact resistance, processability, etc. when it is applied to a metal container (see Patent Document 3, for example). However, in recent years, it is required that metal containers have resistance to increasingly severe retort processing conditions, such as, for example, retort processing at a sterilization temperature of 130°C in the case of coffee with milk or retort processing in a continuous retort system.

### Citation List

### Patent Document(s)

| | |
|---|---|
| Patent Document 1: | JP 6(1994)-306325 A |
| Patent Document 2: | JP 2002-193256 A |
| Patent Document 3: | Japanese Patent No. 3828923 |

### Brief Summary of the Invention

### Problem to be Solved by the Invention

With the foregoing in mind, it is an object of the present invention to provide a highly retort-resistant metal can coating material that is able to form a pinhole-free coating excellent in strength, solvent resistance, impact resistance, processability, etc., and a metal can coated with the coating material.

### Means for Solving Problem

In order to achieve the above object, the present invention provides a coating material for metal cans, containing particles of a thermoplastic resin, wherein the thermoplastic resin contains at least 10 mass% of a polybutylene naphthalate resin.

### Effects of the Invention

According to the present invention, it is possible to provide a highly retort-resistant metal can coating material that can form a pinhole-free coating excellent in strength, solvent resistance, impact resistance, processability, etc., and a metal can coated with the coating material.

### Brief Description of Drawings

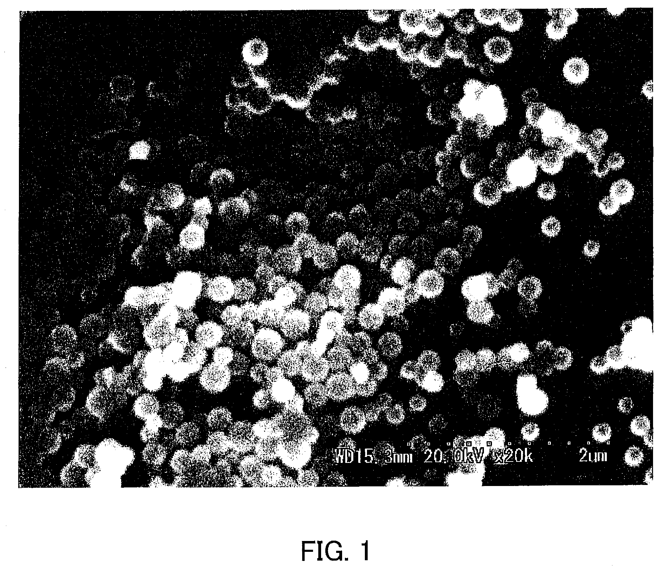

[FIG. 1] FIG. 1 shows a scanning electron micrograph (SEM) of thermoplastic resin particles in the present invention.

### Detailed Description

In the metal can coating material according to the present invention (hereinafter also referred to simply as "the coating material of the present invention"), it is preferable that the thermoplastic resin further contains an aromatic polyester resin.

In the metal can coating material according to the present invention, it is preferable that the particles of the thermoplastic resin have an average primary particle diameter in the range from 10 nm to 1000 nm.

The metal can coating material according to the present invention preferably is for coating metal can lids.

The present invention also provides a metal can coated with the coating material of the present invention.

The present invention also provides a method for producing a metal can, including the steps of: applying the coating material of the present invention to a metal plate; and heating the applied coating material to melt the particles.

In the metal can production method according to the present invention, it is preferable that, in the application step, the amount of the coating material of the present invention to be applied is set so that the mass of the coating material after being dried is in the range from 1 to 14 g/m².

In the metal can production method according to the present invention, it is preferable that, in the application step, the coating material of the present invention is applied so that the resultant coating has a thickness in the range from 1 to 10 µm.

In the metal can production method according to the present invention, it is preferable that the applied coating material is heated at a heating temperature in the range from 100°C to 300°C.

The present invention will be described more specifically below. It is to be noted, however, that the present invention is by no means limited by the following descriptions.

### < Metal Can Coating Material>

The coating material of the present invention contains particles of a thermoplastic resin (hereinafter also referred to simply as "resin particles"). As described above, the thermoplastic resin contains at least 10 mass% of a polybutylene naphthalate resin (hereinafter referred to as "PBN"). The PBN used in the present invention preferably is such that at least 80 mol% of repeating units, each composed of an acid component and a glycol component, are composed of 2,6-naphthalenedicarboxylic acid and 1,4-butanediol. PBN in which the content of the repeating units composed of 2,6-naphthalenedicarboxylic acid and 1,4-butanediol is less that 80 mol% is not preferable, because such PBN exhibits a low rate of crystallization. The PBN content in the thermoplastic resin particles contained in the coating material of the present invention is at least 10 mass%, preferably at least 20 mass%. The coating material of the present invention exhibits the above-described advantageous effect when it is applied to a metal plate, if it contains the thermoplastic resin particles in which the PBN content is equal to or more than the predetermined value.

The thermoplastic resin used in the present invention may further contain an aromatic polyester resin (A) other than the PBN. The aromatic polyester resin (A) is not particularly limited, and examples thereof include polyethylene terephthalate (PET), polyethylene isophthalate (PEI), polybutylene terephthalate (PBT), polyethylene 2,6-naphthalate (PEN), and aromatic polyester resins (aromatic copolyester resins) obtained by copolymerization of an acid component and/or a glycol component of these resins with one or more kinds of other acid components and/or glycol components. Among them, PEN resins, terephthalic acid and/or cyclohexanedimethanol-copolymerized PEN resins, isophthalic acid-copolymerized PET resins, and cyclohexanedimethanol-copolymerized PET resins are preferable from the viewpoint of heat resistance. The coating material of the present invention preferably contains, among the above-listed aromatic polyester resins (A), at least one of the following: one that is amorphous; and one that is crystalline and exhibits a low rate of crystallization.

One kind of aromatic polyester resin (A) may be used, or two or more kinds of aromatic polyester resins (A) may be used in combination. As the aromatic polyester resin (A), the following resins are preferable: PEN resins copolymerized with any one of terephthalic acid, isophthalic acid, and cyclohexanedimethanols or copolymerized with two or more of them; and PET resins copolymerized with any one of isophthalic acid and cyclohexanedimethanols or copolymerized with two or more them. The copolymerization ratio is not particularly limited. It is preferable that the copolymerization ratio is 5 mol% or more, because this causes the resin to be amorphous or to exhibit a lower rate of crystallization, thereby allowing the resin to excel in various properties such as heat resistance and processability.

The amount of the aromatic polyester resin (A) contained in the coating material of the present invention is not particularly limited, and may be in the range from 0 to 90 mass% relative to the total amount of all the resin components contained in the coating material of the present invention, for example. By setting the amount of the aromatic polyester resin (A) in the above-described range, it is possible to impart heat-settability to the resultant coating easily, thus allowing the coating to have excellent hygrothermal resistance. The amount of the aromatic polyester resin (A) contained in the coating material preferably is in the range from 0 to 80 mass%, more preferably in the range from 0 to 75 mass%.

The ratio (mass ratio) between the PBN and the aromatic polyester resin (A) in the coating material of the present invention is not particularly limited. It is preferable that the ratio (PBN : aromatic polyester resin (A)) is 10 : 90 to 100 : 0, more preferably 20 : 80 to 100 : 0, and still more preferably 25 : 75 to 100 : 0.

Among various aromatic polyester resins, PBN exhibits a particularly high rate of crystallization and a relatively high melting point (high heat resistance), and also excels in flexibility (toughness). Thus, the PBN component rapidly forms a crystalline film by being cooled after a heating step to be described below. When the thermoplastic resin particles containing the PBN and the aromatic polyester resin (A) are used in the coating material of the present invention, it is preferable to dissolve and mix the PBN and the aromatic polyester resin on the molecular level before micronization. If the aromatic polyester resin (A) that exhibits a low rate of crystallization or is amorphous is dispersively mixed with the PBN on the molecular level, it is considered that molecular chains of the aromatic polyester resin (A) are partially incorporated into crystals of PBN molecules during the crystallization of the PBN component, thereby immobilizing the resultant coating entirely. In other words, it is considered that rapid crystallization of the PBN exhibits the same effect as a cross-linking reaction caused by an epoxy compound used in conventional coating materials for retort applications. It is also considered that the coating material of the present invention thus can impart the flexibility (toughness) to the entire coating so obtained, and this allows the formation of a coating with excellent hygrothermal resistance (retort resistance), which does not cause any disadvantages such as the generation of pinholes and separation from a metal can even when the coating is placed under severe conditions such as retort processing. It is to be noted, however, that this mechanism does not limit the present invention by any means.

The metal can coating material of the present invention preferably contains thermoplastic resin particles having an average primary particle diameter in the range from 10 nm to 1000 nm. The term "primary particle" means a discrete particle that can no longer be separated. By setting the average primary particle diameter of the resin particles in the above-described range, a coating formed by applying the coating material of the present invention can be made thin, and if the coating is obtained in the form of a thin film, it becomes possible to form a continuous film. Moreover, a suspension obtained at the time of preparing the coating material of the present invention can have a suitable viscosity, so that an operation for separating the suspension can be carried out easily. The average primary particle diameter of the resin particles is more preferably from 100 nm to 1000 nm, still more preferably from 200 nm to 1000 nm. The average primary particle diameter of the resin particles can be measured using a conventionally known device, for example. Examples of the device for measuring the average primary particle diameter of the resin particles include a scanning electron microscope (e.g., trade name: "JEM-6301F", JEOL Ltd.) and a dynamic light scattering particle size analyzer (e.g., trade name "LB-550", HORIBA, Ltd.).

The average secondary particle diameter of the resin particles is not particularly limited, and preferably is not more than 30 µm, for example. By setting the average secondary particle diameter of the resin particles in the above-described range, a coating formed by applying the coating material of the present invention can be made thin. The term "secondary particle" means an aggregate of the primary particles.

The thermoplastic resin particles in the present invention can be produced in the following manner, for example. It is to be noted, however, that the method for producing PBN and an aromatic polyester resin (A) to be used in the present invention are by no means limited to the following illustrative examples.

First, a solution is prepared by dissolving PBN and an aromatic polyester resin (A) in a solvent. The solvent is not particularly limited, and examples thereof include: ester solvents such as ethyl acetate and butyl acetate; dibasic acid ester solvents such as dimethyl adipate, dimethyl glutarate, and dimethyl succinate; ketone solvents such as methyl isobutyl ketone, cyclohexanone, and isophorone; hydrocarbon solvents such as toluene, xylene, and hydrogenated petroleum naphtha; alcohol solvents such as benzyl alcohol and cyclohexanol; ether solvents such as ethylene glycol monobutyl ether, dipropylene glycol butyl ether, and ethylene glycol monophenyl ether, and propylene glycol monophenyl ether; amide solvents such as formamide, dimethylformamide, and dimethylacetamide (DMAc); pyrrolidone solvents such as N-methyl-2-pyrrolidone (NMP); sulfoxide solvents such as dimethyl sulfoxide; and mixtures thereof. Among them, for example, cyclohexanone, isophorone, hydrogenated petroleum naphtha, dipropylene glycol butyl ether, propylene glycol monophenyl ether, dimethylacetamide, N-methyl-2-pyrrolidone, and the like are preferable, because each of these solvents further can be used as a solvent for dissolving a thermoplastic resin after separating particles from the obtained suspension.

The temperature of the solvent at the time of preparing the solution is not particularly limited, and preferably is from 70°C to 220°C, for example. When the temperature of the solvent used is set in the above-described range, particles with the above-described desired average primary particle diameter can be obtained by dissolving the PBN and the aromatic polyester resin (A), and also, the occurrence of yellow discoloration or the like can be suppressed because the degradation of the PBN, the aromatic polyester resin (A), or the solvent does not occur, for example. The temperature of the solvent is more preferably from 130°C to 220°C, still more preferably from 130°C to 200°C.

The amount of the PBN and the amount of the aromatic polyester resin (A) added to the solvent are not particularly limited. Preferably, the total amount of them is, for example, 1 to 40 parts by mass with respect to 100 parts by mass of the solvent. By setting the total amount of the PBN and the aromatic polyester resin (A) added to the solvent in the above-described range, it is possible to improve the productivity and also to obtain the resin particles with the above-described desired average primary particle diameter, for example. The total amount of them to be added more preferably is from 5 to 40 parts by mass, still more preferably from 10 to 30 parts by mass, with respect to 100 parts by mass of the solvent. By adjusting the ratio between the amount of the PBN and the amount of the aromatic polyester resin (A) to be added at the time of preparing this solution, it is possible to adjust the composition ratio between the PBN and the aromatic polyester resin (A) in the above-described resin particles.

Next, the solution is cooled to prepare a suspension containing the thermoplastic resin particles. Examples of means for cooling the solution include cooling devices such as a heat exchanger. The temperature of the suspension after the cooling is not particularly limited. For example, it is preferable that the solution containing the components of the coating material of the present invention at 70°C to 220°C is cooled to 50°C or lower using, e.g., the above-described heat exchanger. By setting the temperature of the solution after the cooling to 50°C or lower, it is possible to obtain resin particles with an average primary particle diameter in the range from 10 nm to 1000 nm, for example.

The method for cooling the solution containing the components of the coating material of the present invention may be, for example, cooling the solution itself using the heat exchanger, or providing a solvent cooled to 20°C to -90°C using the heat exchanger in advance and then cooling the solution by mixing it with the solvent. From the viewpoint of cooling efficiency, it is preferable to cool the solution containing the components of the coating material of the present invention by adding a solvent cooled in advance to a container containing the solution.

The rate of cooling is not particularly limited, and preferably is 20°C/second or higher, for example. By setting the rate of cooling to 20°C/second or higher, it is possible to obtain resin particles with a desired average primary particle diameter in the range from 10 nm to 1000 nm, for example.

In the above-described manner, the thermoplastic resin particles can be produced. It is to be noted, however, that the method for producing the thermoplastic resin particles used in the coating material of the present invention is not limited to this illustrative example.

The coating material of the present invention may further contain a component(s) other than the PBN and the aromatic polyester resin (A) as appropriate, within a range not interfering with the effect of the coating material. Examples of the other components include curing agents, thermosetting resins, coating material components, nucleating agents, inorganic particles, thermostabilizers, UV absorbers, pigments, and dyes.

The coating material of the present invention can be produced in the form of a suspension (slurry coating material) by, for example, dispersing the thermoplastic resin particles and, when necessary, the other component(s) as described above in a solvent. The viscosity of the coating material (suspension) is not particularly limited. The viscosity measured with a Ford Cup viscometer is, for example, 10 to 100 seconds (Ford Cup No. 4), preferably 15 to 50 seconds (Ford Cup No. 4), and more preferably 20 to 35 seconds (Ford Cup No. 4).

The solvent for dispersing the thermoplastic resin particles is not particularly limited, and examples thereof include: ester solvents such as ethyl acetate and butyl acetate; dibasic acid ester solvents such as dimethyl adipate, dimethyl glutarate, and dimethyl succinate; ketone solvents such as methyl isobutyl ketone, cyclohexanone, and isophorone; hydrocarbon solvents such as toluene, xylene, and hydrogenated petroleum naphtha; alcohol solvents such as benzyl alcohol and cyclohexanol; ether solvents such as ethylene glycol monobutyl ether, dipropylene glycol butyl ether, and ethylene glycol monophenyl ether, and propylene glycol monophenyl ether; amide solvents such as formamide, dimethylformamide, and dimethylacetamide; pyrrolidone solvents such as N-methyl-2-pyrrolidone (NMP); water; and mixtures thereof. Among them, hydrogenated petroleum naphtha, ethylene glycol monobutyl ether, dipropylene glycol butyl ether, and the like are preferable.

The coating material of the present invention may further contain an additive(s) such as a leveling agent, a wetting agent, an antifoaming agent, and a lubricant, and a coloring agent(s) such as a pigment, as appropriate.

The method for dispersing the resin particles is not particularly limited, and examples thereof include dispersion with ultrasonic waves and dispersion with a stirrer. Examples of a device used for dispersing the resin particles include a homogenizer, a homomixer, a roll mill, a bead mill, and a high-pressure wet pulverization device.

In the coating material of the present invention, when the secondary particles are dispersed in a solvent, it is preferable to micronize the secondary particles using a suitable solvent and a suitable dispersion method selected appropriately. It is more preferable to micronize the secondary particles eventually to primary particles. By micronizing the secondary particles to primary particles, it becomes possible to control the thickness of the resultant coating to a desired value, thus allowing a smoother coating to be obtained, for example.

### <Metal Can>

As described above, the metal can according to the present invention is a metal can coated with the coating material of the present invention.

A metal (metal plate) of the metal can of the present invention to be coated with the coating material is not particularly limited, and examples thereof include: aluminum, steel, copper, stainless steel, and metal plates obtained by surface-treating these metals. For example, in the case where the metal is steel, the metal plate may be a tin-plated steel plate (tin plate), a zinc-plated steel plate, a steel plate electrolytically treated with chromic acid (tin-free steel), or the like. The thickness of the metal plate is not particularly limited, and preferably is 0.2 to 0.5 mm, more preferably 0.21 to 0.32 mm, for example.

As described above, the metal can production method according to the present invention includes the steps of: applying the coating material of the present invention to a metal plate; and heating the applied coating material to melt the particles.

In the application step, the method for applying the coating material of the present invention is not particularly limited, and the application can be carried out by a known method such as roller coating, spray coating, brush coating, knife coating, dip coating, electrodeposition coating, and electrostatic coating, for example.

In the application step, it is preferable that the amount of the coating material of the present invention to be applied is set so that the mass of the coating material after being dried is, for example, in the range from 1 to 14 g/m², more preferably in the range from 1 to 10 g/m². Also, it is preferable that the coating material of the present invention is applied so that the resultant coating has a thickness in the range from 1 to 10 µm, more preferably in the range from 1 to 7 µm, and still more preferably in the range from 1 to 5 µm.

In the metal can production method according to the present invention, the heating step is performed as described above. By this heating step, the thermoplastic resin particles are melted. As a result, a pinhole-free uniform coating is formed, which allows the coating to exhibit excellent solvent resistance, etc.

In the heating step, the applied coating material of the present invention preferably is heated at a heating temperature (baking temperature) from 100°C to 300°C, more preferably from 150°C to 280°C, for example. The heating time is not particularly limited, and is, for example, from 10 to 60 seconds, more preferably from 15 to 30 seconds. Furthermore, it is preferable to perform water cooling after the heating. By performing the water cooling, it is possible to improve the appearance and physical properties, such as processability, of the coating.

The present invention is applicable to can bodies and can lids of various cans such as, for example, beverage cans, food cans, art cans, aerosol cans, 18-liter cans, dry battery shells, battery cans, and tennis ball cans. Examples

Next, examples of the present invention will be described together with comparative examples. It is to be noted, however, that the present invention is by no means limited or restricted by the following examples and comparative examples. Various characteristics and physical properties in the respective examples and comparative examples were measured or evaluated by the following methods.

### (Intrinsic Viscosity (IV) of Resins to be Used)

The intrinsic viscosity (IV) of each resin used in the respective examples and comparative examples was measured at 20°C with an automatic viscometer AVL-6C manufactured by SUN Electronic Industries Corporation, using as a solvent a liquid mixture of phenol and tetrachloroethane (phenol : tetrachloroethane = 60 : 40 (mass ratio)). The Huggins constant (K) was set to 0.37.

### (Average Primary Particle Diameter)

The average primary particle diameter of thermoplastic resin particles used in the present invention was measured using a scanning electron microscope (trade name: "JEM-6301F", JEOL Ltd.) and a dynamic light scattering particle size analyzer (trade name: "LB-550", HORIBA, Ltd.).

### (Thickness)

The thickness of the coating was measured using an electromagnetic/eddy-current thickness tester (trade name: "LZ-200W", Kett Electric Laboratory).

### (Hardness)

The pencil hardness in accordance with JIS K 5600-5-4 (1999) was measured. A pencil used in the measurement was "uni" (trade name) manufactured by Mitsubishi Pencil Co., Ltd.

### (Evaluation of Bending Properties)

Bending properties were measured using a mandrel bend tester (Toyo Seiki Seisaku-sho, Ltd.). The measurement was carried out according to a 0T bending test (which is a test carried out in the state where, between test plates for the bending test, no same plate is sandwiched (i.e., nothing intervenes between the test plates)). Thereafter, the bent portion was immersed in a 1% saline to a depth of 20 mm. Then, with a digital enamel rater (manufactured by Peco Corporation) as a current measuring device, the current value obtained 4 seconds after the voltage application of 6 V to flow a current was measured.
- A:: less than 10 mA
- B:: from 10 to 100 mA
- C:: more than 100 mA

### (Evaluation of Solvent Resistance)

On a protruding part of a 2-pound hammer, 16 sheets of gauze were overlaid and fixed. The gauze was wetted well with methyl ethyl ketone, and the gauze-covered protruding part was then moved back and forth on a test piece coated with a coating material. The number of these to-and-fro motions performed until the coating formed from the coating material peeled off was recorded as a solvent resistance.

### (Retort Resistance)

### (1) Evaluation of blushing

Part of a test piece coated with the coating material was immersed in hot water at 125°C (under pressure) for 60 minutes. Thereafter, the change in coating was evaluated through visual observation.

### Evaluation criteria

- A:: no change
- B:: portion around the interface slightly turned white
- C:: significant blushing was observed

### (2) Evaluation for severe retort processing

A coated test piece was placed in water vapor at 125°C (under pressure) for 30 minutes. Thereafter, the change in the coating was evaluated through visual observation. By placing a 1-liter beaker containing 600 cc of tap water on a punched slit, the test piece was cooled partially to cause condensation at the cooled portion.

The change in the coating on the thus-treated coated test piece was evaluated through visual observation.

### Evaluation criteria

- A:: no change
- B:: portion along the punched slit slightly turned white
- C:: significant blushing was observed

### (3) Evaluation for retort processing using slider solutions

Tap water containing a slider solution at a concentration of 1% was provided as an evaluation solution, and a retort processing was performed by immersing a coated test piece in the evaluation solution (125°C, 30 minutes). The change in the coating was evaluated through visual observation. As the slider solution, each of the following two kinds of slider solutions was used: a neutral slider solution (trade name "Slider S405", Johnson Diversey Co., Ltd.); and an alkaline slider solution (trade name "High Sleek 501", TAKEMOTO OIL & FAT Co., Ltd.). The evaluation was made on the following three portions: the immersed portion (below the interface); at the interface; and the portion not immersed (above the interface).

### Evaluation criteria

- A:: no change.
- B:: slight change in appearance (color etc.) was observed
- C:: change in appearance (color etc.) was observed

### (4) Evaluation for retort processing using actual liquids

Can bodies (190-g cans) to which stay-on tabs (SOT) had been seamed were filled with 180 g of coffee with milk (trade name "WANDA Kin No Bito", Asahi Soft Drinks Co., Ltd.) and 180 g of black coffee (trade name "GEORGIA EMBLEM BLACK", Coca-Cola Customer Marketing Co., Ltd.), respectively, by hot-pack filling (90°C or higher). Bottom lids were then seamed to the can bodies. Thereafter, these cans were subjected to a retort processing (125°C, 40 minutes), and the change in coating was evaluated through visual observation. The can orientation at the time during the retort processing was set to the following two kinds: the SOT facing upward (with the coating not being immersed in the liquid contained in the can) and the SOT facing downward (with the coating being immersed in the liquid contained in the can).

### Evaluation criteria

- A:: no change
- B:: slight change in appearance (color etc.) was observed
- C:: change in appearance (color etc.) was observed

### <Production Example 1: Production of PBN resin>

The PBN resin used in the examples of the present invention was produced by a known method to be described below. It is to be noted, however, that the method for producing the PBN resin is not limited to the following method.

The mixture of 1000 parts by mass of 2,6-naphthalenedicarboxylic acid dimethyl ester (2,6-NDCM) and 520 parts by mass of 1,4-butanediol (1,4-BD) was placed in a reactor equipped with a stirrer, a rectifying column, and a methanol distillation condenser. The contents in the reactor were dissolved at 190°C, and thereafter, 0.33 parts by mass of tetrabutyl titanate was added as a catalyst for transesterification. The resultant mixture was heated from 190°C to 230°C in a nitrogen atmosphere, and transesterification was carried out while distilling away the produced methanol to the outside of the system. After the completion of the transesterification, the mixture was heated gradually from 230°C to 255°C while reducing the pressure gradually from an ordinary pressure to 0.10 kPa. The polycondensation reaction was allowed to proceed until the stirring torque reached a predetermined value. The reaction was terminated when the stirring torque reached the predetermined value, and the mixture was extruded into water and formed into pellets. The thus-obtained resin had an intrinsic viscosity (IV) of 0.70 dl/g.

### <Production Example 2: Production of amorphous PEN resin>

The amorphous PEN resin used in Examples 4 and 5 and Comparative Example 2 of the present invention was produced in the following manner. It is to be noted, however, that the method for producing the amorphous PEN resin is not limited to the following method.

1550 parts by mass of 2,6-naphthalenedicarboxylic acid dimethyl ester (2,6-NDCM), 220 parts by mass of dimethyl terephthalate (DMT), 830 parts by mass of ethylene glycol (EG), and 450 parts by mass of 1,4-cyclohexanedimethanol (1,4-CHDM) were placed in a reactor equipped with a stirrer, a rectifying column, and a methanol distillation condenser. The contents in the reactor were dissolved at 180°C, and thereafter, 0.22 parts by mass of manganese acetate tetrahydrate and 0.60 parts by mass of calcium acetate monohydrate were added as catalysts for transesterification. The resultant mixture was heated from 180°C to 250°C in nitrogen atmosphere, and transesterification was carried out while distilling away the produced methanol to the outside of the system. After the completion of the transesterification, 1.18 parts by mass of triethyl phosphate and 0.25 parts by mass of germanium dioxide were added. The resultant mixture was heated gradually from 250°C to 280°C while reducing the pressure gradually from an ordinary pressure to 0.10 kPa. The polycondensation reaction was allowed to proceed until the stirring torque reached a predetermined value. The reaction was terminated when the stirring torque reached the predetermined value, and the mixture extruded into water and formed into pellets. The thus-obtained resin had an intrinsic viscosity (IV) of 0.62 dl/g and was an amorphous resin composition containing 2,6-naphthalene dicarboxylic acid (2,6-NDCA), terephthalic acid (TPA), EG, and 1,4-CHDM as its components.

### [Example 1]

PBN (17 g) as a thermoplastic resin and phenyl propylene glycol and SOLVESSO™ #150 (Exxon Mobil Corporation) (each 41.5 g) as components of a solvent were weighed into a 1-liter four-necked flask equipped with a thermometer and a stirrer. As the PBN, the PBN obtained in Production Example 1 was used. Thereafter, the liquid temperature was set to 193°C to dissolve the thermoplastic resin in the solvent. By cooling the solution, a suspension containing thermoplastic resin particles and having a solid content of 17% was obtained.

FIG. 1 shows a scanning electron micrograph of the thermoplastic resin particles in the present example. It can be seen from FIG. 1 that the particles had an average primary particle diameter of not more than 300 nm.

### [Example 2]

The same procedure as in Example 1 was performed except that the PBN (1.4 g) and PEN (12.6 g) as thermoplastic resins and phenyl propylene glycol and SOLVESSO™ #150 (each 43 g) as components of a solvent were weighed. As a result, a suspension according to the present example containing the thermoplastic resin particles and having a solid content of 14% was obtained. As the PEN, "TEONEX^{®} TN-8060" (intrinsic viscosity IV = 0.61 dl/g) manufactured by Teijin Chemicals Ltd. was used. The ratio between the PEN and the PBN in the particles was 10 : 90 (PBN : PEN).

### [Example 3]

The same procedure as in Example 1 was performed except that the PBN (4.5 g) and the PEN (10.5 g) as thermoplastic resins and phenyl propylene glycol and SOLVESSO™ #150 (each 42.5 g) as components of a solvent were weighed. As a result, a suspension according to the present example containing the thermoplastic resin particles and having a solid content of 15% was obtained. The ratio between the PEN and the PBN in the particles was 30 : 70 (PBN : PEN).

### [Example 4]

The same procedure as in Example 1 was performed except that the PBN (4.5 g) and the amorphous PEN produced in Production Example 2 (10.5 g) as thermoplastic resins and phenyl propylene glycol and SOLVESSO™ #150 (each 42.5 g) as components of a solvent were weighed. As a result, a suspension according to the present example containing the thermoplastic resin particles and having a solid content of 15% was obtained. The ratio between the PBN and the amorphous PEN in the particles was 30 : 70 (PBN : amorphous PEN).

### [Example 5]

The same procedure as in Example 1 was performed except that the PBN (7.5 g) and the amorphous PEN produced in Production Example 2 (7.5 g) as thermoplastic resins and phenyl propylene glycol and SOLVESSO™ #150 (each 42.5 g) as components of a solvent were weighed. As a result, a suspension according to the present example containing the thermoplastic resin particles and having a solid content of 15% was obtained. The ratio between the PBN and the amorphous PEN in the particles was 50 : 50 (PBN : amorphous PEN).

### [Example 6]

The same procedure as in Example 1 was performed except that the PBN (5.1 g) and PET (11.9 g) as thermoplastic resins and phenyl propylene glycol and SOLVESSO™ #150 (each 41.5 g) as components of a solvent were weighed. As a result, a suspension according to the present example containing the thermoplastic resin particles and having a solid content of 17% was obtained. As the PET, "BELLPET EFG70 (trade name)" (intrinsic viscosity IV = 0.75 dl/g) manufactured by Bell Polyester Products, Inc. was used. The ratio between the PBN and the PET in the particles was 30 : 70 (PBN : PET).

### [Example 7]

The same procedure as in Example 1 was performed except that the PBN (8.5 g) and the PET (8.5 g) as thermoplastic resins and phenyl propylene glycol and SOLVESSO™ #150 (each 41.5 g) as components of a solvent were weighed. As a result, a suspension according to the present example containing the thermoplastic resin particles and having a solid content of 17% was obtained. The ratio between the PBN and the PET in the particles was 50 : 50 (PBN : PET).

### [Example 8]

The same procedure as in Example 1 was performed except that the PBN (4.5 g) and 25 mol% isophthalic acid-copolymerized PET (I-PET) (10.5 g) as thermoplastic resins and phenyl propylene glycol and SOLVESSO™ #150 (each 42.5 g) as components of a solvent were weighed. As a result, a suspension according to the present example containing the thermoplastic resin particles and having a solid content of 15% was obtained. As the I-PET, "I-PET IP252B (trade name)" (intrinsic viscosity IV = 0.68 dl/g) manufactured by Bell Polyester Products, Inc. was used. The ratio between the PBN and the I-PET in the particles was 30 : 70 (PBN : I-PET).

### [Example 9]

The same procedure as in Example 1 was performed except that the PBN (7.5 g) and the same I-PET as used in Example 8 (7.5 g) as thermoplastic resins and phenyl propylene glycol and SOLVESSO™ #150 (each 42.5 g) as components of a solvent were weighed. As a result, a suspension according to the present example containing the thermoplastic resin particles and having a solid content of 15% was obtained. The ratio between the PBN and the I-PET in the particles was 50 : 50 (PBN : I-PET).

### [Example 10]

The same procedure as in Example 1 was performed except that the PBN (4.5 g) and a copolyester (PET-G) (10.5 g) composed of terephthalic acid, cyclohexanedimethanol, and ethylene glycol (terephthalic acid/cyclohexanedimethanol/ethylene glycol = 100/30/70 (mol%)) as thermoplastic resins and phenyl propylene glycol and SOLVESSO™ #150 (each 42.5 g) as components of a solvent were weighed. As a result, a suspension according to the present example containing the thermoplastic resin particles and having a solid content of 15% was obtained. As the PET-G, "PET-G 6763 (trade name)" (intrinsic viscosity IV = 0.80 dl/g) manufactured by Eastman Chemical Company was used. The ratio between the PBN and the PET-G in the particles was 30 : 70 (PBN : PET-G).

### [Example 11]

The same procedure as in Example 1 was performed except that the PBN (7.5 g) and the same PET-G as used in Example 10 (7.5 g) as thermoplastic resins and phenyl propylene glycol and SOLVESSO™ #150 (each 42.5 g) as components of a solvent were weighed. As a result, a suspension according to the present example containing the thermoplastic resin particles and having a solid content of 15% was obtained. The ratio between the PBN and the PET-G in the particles was 50 : 50 (PBN : PET-G).

### [Comparative Example 1]

The same procedure as in Example 1 was performed except that the same PEN as used in Example 2 (15 g) as a thermoplastic resin and phenyl propylene glycol and SOLVESSO™ #150 (each 42.5 g) as components of a solvent were weighed. As a result, a suspension according to the present comparative example containing the thermoplastic resin particles and having a solid content of 15% was obtained.

### [Comparative Example 2]

The same procedure as in Example 1 was performed except that the amorphous PEN produced in Production Example 2 (20 g) as a thermoplastic resin and phenyl propylene glycol and SOLVESSO™ #150 (each 40 g) as components of a solvent were weighed. As a result, a suspension according to the present comparative example containing the thermoplastic resin particles and having a solid content of 20% was obtained.

### [Comparative Example 3]

The same procedure as in Example 1 was performed except that the same PET as used in Example 6 (12 g) as a thermoplastic resin and phenyl propylene glycol and SOLVESSO™ #150 (each 44 g) as components of a solvent were weighed. As a result, a suspension according to the present comparative example containing the thermoplastic resin particles and having a solid content of 12% was obtained.

### [Comparative Example 4]

The same procedure as in Example 1 was performed except that the same I-PET as used in Example 8 (12 g) as a thermoplastic resin and phenyl propylene glycol and SOLVESSO™ #150 (each 44 g) as components of a solvent were weighed. As a result, a suspension according to the present comparative example containing the thermoplastic resin particles and having a solid content of 12% was obtained.

### [Comparative Example 5]

The same procedure as in Example 1 was performed except that the same PET-G as used in Example 10 (12 g) as a thermoplastic resin and phenyl propylene glycol and SOLVESSO™ #150 (each 44 g) as components of a solvent were weighed. As a result, a suspension according to the present comparative example containing the thermoplastic resin particles and having a solid content of 12% was obtained.

### [Comparative Example 6]

The suspension obtained in Example 1 (0.6 g) and the suspension obtained in Comparative Example 1 (6.0 g) were weighed into a container, and mixed well together. As a result, a suspension according to the present comparative example having a solid content of 15.2 % was obtained. The ratio between the PBN and the PEN in the particles was 10 : 90 (PBN : PEN).

### [Comparative Example 7]

The suspension obtained in Example 1 (1.8 g) and the suspension obtained in Comparative Example 1 (4.7 g) were weighed into a container, and mixed well together. As a result, a suspension according to the present comparative example having a solid content of 15.4 % was obtained. The ratio between the PBN and the PEN in the particles was 30 : 70 (PBN : PEN).

### [Comparative Example 8]

The suspension obtained in Example 1 (1.8 g) and the suspension obtained in Comparative Example 1 (3.5 g) were weighed into a container, and mixed well together. As a result, a suspension according to the present comparative example having a solid content of 18.9% was obtained. The ratio between the PBN and the amorphous PEN in the particles was 30 : 70 (PBN : amorphous PEN).

### [Comparative Example 9]

The suspension obtained in Example 1 (2.9 g) and the suspension obtained in Comparative Example 1 (2.5 g) were weighed into a container, and mixed well together. As a result, a suspension according to the present comparative example having a solid content of 18.5% was obtained. The ratio between PBN and the amorphous PEN in the particles was 50 : 50 (PBN : amorphous PEN).

### [Comparative Example 10]

An epoxy coating material (95-L1342A2, Kansai Paint Co., Ltd.), which has been used conventionally as a coating material for metal cans, was used as a coating material according to the present comparative example.

### (Production of coated test piece)

A coated test piece was produced by applying each of the metal can coating materials (suspensions) obtained in the examples and comparative examples to one surface of an aluminum plate (5K52, thickness: 0.22 mm, 10 cm x 20 cm) with a bar coater in such a manner that the thickness of the resultant coating after being dried was 2 µm (about 2.8 g/m²) and then drying the applied coating material at a plate temperature of 275°C for 20 seconds.

Table 1 shows the results of the evaluation with respect to the metal can coating materials according to Examples 1 to 11 and Comparative Examples 1 to 9. Table 2 shows the results of the evaluation for retort processing using slider solutions with respect to the metal can coating materials according to Examples 1, 4, and 5 and Comparative Examples 2, 3, and 10. Table 3 shows the results of the evaluation for retort processing using actual liquids with respect to the metal can coating materials according to Examples 1, 4, and 5 and Comparative Examples 2 and 10.

**[Table 1]**

| | thermoplastic resin (part by mass) | | solvent | particle size distribution | solid content (%) | viscosity (#No. 4) (sec) | pencil hardness | solvent resistance | bending properties 0T | retort resistance | |
|---|---|---|---|---|---|---|---|---|---|---|---|
| | PBN | aromatic polyester resin (A) | | median diameter (nm) | | | | | | blushing | severe retort processing |
| Ex. 1 | 100 | - | PhFG/#150 | 250 | 17 | 25 | 2H | 100 < | A | A | A |
| Ex. 2 | 10 | PEN 90 | PhFG/#150 | 492 | 14 | 30 | 2H | 100< | A | A | B |
| Ex. 3 | 30 | PEN 70 | PhFG/#150 | 418 | 15 | 30 | 2H | 100 < | A | A | A |
| Ex. 4 | 30 | amorphous PEN 70 | PhFG/#150 | 786 | 15 | 30 | 2H | 100 < | A | A | A |
| Ex. 5 | 50 | amorphous PEN 50 | PhFG/#150 | 876 | 15 | 25 | 2H | 100 < | A | A | A |
| Ex. 6 | 30 | PET 70 | PhFG/#150 | 524 | 17 | 28 | 2H | 100 < | B | A | A |
| Ex. 7 | 50 | PET 50 | PhFG/#150 | 616 | 17 | 30 | 2H | 100< | B | A | A |
| Ex. 8 | 30 | I-PET 70 | PhFG/#150 | 382 | 15 | 30 | 2H | 100< | B | A | A |
| Ex. 9 | 50 | I-PET 50 | PhFG/#150 | 366 | 15 | 32 | 2H | 100 < | A | A | A |
| Ex. 10 | 30 | PET-G 70 | PhFG/#150 | 239 | 15 | 30 | 2H | 100 < | A | A | A |
| Ex. 11 | 50 | PET-G 50 | PhFG/#150 | 284 | 15 | 32 | 2H | 100 < | A | A | A |
| Comp. Ex. 1 | - | PEN 100 | PhFG/#150 | 325 | 15 | 30 | 2H | 100 < | B | B | C |
| Comp. Ex. 2 | - | amorphous PEN 100 | PhFG/#150 | 1512 | 20 | 20 | 2H | 100< | B | B | C |
| Comp. Ex. 3 | - | PET 100 | PhFG/#150 | 314 | 12 | 28 | 2H | 100< | C | A | B |
| Comp. Ex. 4 | - | I-PET 100 | PhFG/#150 | 256 | 12 | 32 | 2H | 30 | C | A | B |
| Comp. Ex. 5 | - | PET-G 100 | PhFG/#150 | 327 | 12 | 32 | 2H | 100 < | B | A | B |
| Comp. Ex. 6 | 1/9 blend of Ex. 1 and Comp. Ex. 1 | | | | | | 2H | 100 < | A | B | C |
| Comp. Ex. 7 | 3/7 blend of Ex. 1 and Comp. Ex. 1 | | | | | | 2H | 100 < | A | B | C |
| Comp. Ex. 8 | 3/7 blend of Ex. 1 and Comp. Ex. 2 | | | | | | 2H | 100 < | A | B | C |
| Comp. Ex. 9 | 5/5 blend of Ex. 1 and Comp. Ex. 2 | | | | | | 2H | 100 < | A | B | C |

| | | | | | | | | | | | |
|---|---|---|---|---|---|---|---|---|---|---|---|
| PEN: polyethylene naphthalate amorphous PEN: copolymer resin composed of naphthalenedicarboxylic acid/terephthalic acid/cyclohexanedimethanol/ethylene glycol (85/15/40/60 mol%) PET: polyethylene terephthalate I-PET: copolyester composed of terephthalic acid/ isophthalic acid/ethylene glycol (75/25/100 mol%) PET-G: copolyester composed of terephthalic acid/cyclohexanedimethanol/ethylene glycol (100/30/70 mol%) PhFG: phenyl propylene glycol (Nippon Nyukazai Co., Ltd.) #150: SOLVESSO™ #150 (Exxon Mobil Corporation) | | | | | | | | | | | |

**[Table 2]**

| | thermoplastic resin (part by mass) | | Evaluation for retort processing using slider solutions | | | | | |
|---|---|---|---|---|---|---|---|---|
| | | | neutral | | | alkaline | | |
| | PBN | aromatic polyester resin (A) | below interface | at interface | above interface | below interface | at interface | above interface |
| Example 1 | 100 | - | A | A | A | A | A | A |
| Example 4 | 30 | amorphous PEN 70 | A | A | A | B | B | A |
| Example 5 | 50 | amorphous PEN 50 | A | A | A | A | A | A |
| Comparative Example 2 | - | amorphous PEN 100 | A | A | A | A | B | A |
| Comparative Example 3 | - | PET 100 | C | C | B | C | C | B |
| Comparative Example 10 | epoxy coating material | | A | A | A | B | B | A |

**[Table 3]**

| | thermoplastic resin (part by mass) | | Evaluation for retort processing using actual liquids | | | |
|---|---|---|---|---|---|---|
| | | | coffee with milk | | black coffee | |
| | PBN | aromatic polyester resin (A) | SOT facing upward | SOT facing downward | SOT facing upward | SOT facing downward |
| Example 1 | 100 | - | A | A | A | A |
| Example 4 | 30 | amorphous PEN 70 | A | A | B | B |
| Example 5 | 50 | amorphous PEN 50 | A | A | A | A |
| Comparative Example 2 | - | amorphous PEN 100 | A | A | C | C |
| Comparative Example 10 | epoxy coating material | | A | A | B | B |

As can be seen from Table 1 above, the metal test pieces coated with the metal can coating materials of the examples exhibited a high strength with a pencil hardness of 2H and also excelled in solvent resistance, bending properties, and retort resistance. In contrast, none of the metal test pieces coated with the metal can coating materials according to the comparative examples could achieve favorable results in all of the solvent resistance, bending properties, and retort resistance. Also, it can be seen that the coating materials according to the examples were superior to the coating materials according to the comparative examples especially in resistance to severe retort processing. Also, from the results obtained regarding the coating materials of Comparative Examples 6 to 9, it can be seen that a sufficiently high retort resistance could not be obtained merely by mixing PBN particles with any other resin particles. This demonstrates that it is important that the thermoplastic resin constituting the particles contains at least 10% of PBN. The coating materials of the examples could impart heat resistance (high melting point) and flexibility (resistance to bending, toughness) to the entire coating so obtained. It is considered that this allowed the formation of a coating having excellent hygrothermal resistance (retort resistance), which does not cause any disadvantages such as the generation of pinholes and separation from a metal can even when the coating is placed under severe conditions such as retort processing.

As can be seen from Tables 2 and 3, in the evaluation for retort processing using slider solutions and the evaluation for retort processing using actual liquids, the metal can coating materials of Examples 1 and 5 exhibited superior water resistance (retort resistance) compared to the conventional coating material (Comparative Example 10). It also can be seen that the metal can coating material of Example 4 exhibited a substantially equivalent retort resistance to the conventional epoxy coating material, and thus can be used without causing any problem in practical use. In the case where the amorphous PEN resin was used alone (Comparative Example 2), the metal can coating material exhibited an inferior retort resistance when the actual liquid was black coffee. However, when the metal can coating material further contained PBN, the retort resistance was improved, so that the metal can coating material was at a practical level sufficient to withstand uses where the retort resistance is required. In the evaluation for retort processing using slider solutions, the improvement in retort resistance was observed regardless of whether or not the coating was immersed in each slider solution. Thus, it can be said that each of the metal can coating materials according to the present examples is at a practical level for use as a coating material for the inner surfaces of cans.

### Industrial Applicability

The metal can coating material according to the present invention is applicable to a wide range of uses, e.g., can bodies and can lids of various cans including: beverage cans such as coffee cans; food cans; art cans; aerosol cans; 18-liter cans; dry battery shells; tennis ball cans; and battery cans.

## Claims

1. A coating material for metal cans, comprising:
particles of a thermoplastic resin,
wherein the thermoplastic resin comprises at least 10 mass% of a polybutylene naphthalate resin.

2. The coating material according to claim 1, wherein the thermoplastic resin further comprises an aromatic polyester resin.

3. The coating material according to claim 1 or 2, wherein the particles of the thermoplastic resin have an average primary particle diameter in the range from 10 nm to 1000 nm.

4. The coating material according to any one of claims 1 to 3, for coating metal can lids.

5. A metal can coated with the coating material according to any one of claims 1 to 4.

6. A method for producing a metal can, the method comprising the steps of:
applying the coating material according to any one of claims 1 to 4 to a metal plate; and
heating the applied coating material to melt the particles.

7. The method according to claim 6, wherein, in the application step, the amount of the coating material to be applied is set so that the mass of the coating material after being dried is in the range from 1 to 14 g/m².

8. The method according to claim 6 or 7, wherein, in the application step, the coating material is applied so that the resultant coating has a thickness in the range from 1 to 10 µm.

9. The method according to any one of claims 6 to 8, wherein, in the heating step, the applied coating material is heated at a heating temperature in the range from 100°C to 300°C.
